# EUROPÄISCHE PATENTSCHRIFT

(11) **EP 2 438 974 B1**
(45) Veröffentlichungstag und Bekanntmachung des Hinweises auf die Patenterteilung: **24.07.2013**
(21) Anmeldenummer: 10186500.4
(22) Anmeldetag: 05.10.2010
(51) Int. Cl.: B01D 35/05

(54) **Schwimmfähige Reinigungsanordnung**
Buoyant cleaning assembly
Agencement de nettoyage flottant

(43) Veröffentlichungstag der Anmeldung: 11.04.2012
(73) Patentinhaber: Gabelgaard, Keld, 71717 Beilstein (DE)
(72) Erfinder: Gabelgaard, Keld, 71717 Beilstein (DE)
(74) Vertreter: Heselberger, Johannes

(56) Entgegenhaltungen:
- WO-A1-99/63548
- WO-A1-2009/038468
- FR-A- 651 371
- FR-A- 1 602 710
- GB-A- 2 195 912
- NL-A- 8 901 834
- US-A- 1 647 809
- US-A- 1 909 578
- US-A- 4 032 449
- US-A1- 2010 065 508

## Beschreibung

Die vorliegende Erfindung betrifft ein schwimmfähiges Reinigungssystem, welches für die Verwendung in Brennelement- und/oder Reaktorbecken von Kernkraftwerken konzipiert wurde.

In der europäischen Patentschrift EP 0 247 325 B1 der Anmelderin wird eine Filtervorrichtung beschrieben, welche in einer zu filternden Flüssigkeit angeordnet ist und welche einen Rahmen, zumindest eine mit dem Rahmen verbundene Pumpe und eine mit der Ansaugseite der Pumpe verbundene Ansaugeinrichtung aufweist. Die Filtervorrichtung umfasst des Weiteren zumindest einen Filter mit einer Einlassseite, wobei die Einlassseite mit der Druckseite der Pumpe verbunden ist; eine freistehende Auslassseite des Filters durch die das Filtrat von dem Filter im Wesentlichen direkt in der zu filternden Flüssigkeit wieder abgegeben wird; eine lösbare Verbindung zwischen Filtereinlass und Pumpendruckseite durch die das Filter von der Vorrichtung abgekoppelt werden kann; und eine direkt oder indirekt an dem Rahmen befestigte automatisch steuerbare Betätigungsvorrichtung zur Betätigung der lösbaren Verbindung. Der Reinigungsvorgang umfasst dabei das Pressen der Flüssigkeit durch ein Filter, das in einem Rahmen in dem Flüssigkeitsbehälter angeordnet ist; die Abgabe eines Filtrats von dem Filter direkt zurück in den Flüssigkeitsbehälter; das Bewegen des Rahmens mit dem beladenen Filter über eine Filteraufnahmevorrichtung sowie das Abkoppeln des beladenen Filters von dem Rahmen und Übertragung des Filters in die Filteraufnahmeeinrichtung.

Aufgabe der vorliegenden Erfindung ist es, ein Reinigungssystem bereitzustellen, mit dem der Wechselvorgang für die bekannte Filtervorrichtung (oder auch eine andere geeignete Filtervorrichtung) flexibler, d.h. vom Beckenrand entfernt, zu gestalten und ohne dass es dabei einer Abstützung der entsprechenden Wechseleinrichtungen an umliegenden Strukturen (wie z. B. Wänden) bedarf.

Diese Aufgabe wird erfindungsgemäß gelöst durch ein schwimmfähiges Reinigungssystem, insbesondere zur Verwendung in Brennelement- und Reaktorbecken von Kernkraftwerken, aufweisend einen oder mehrere Schwimmkörper, eine Filtervorrichtung, welche lösbar mit dem Schwimmkörper bzw. den Schwimmkörpern verbunden ist, eine Wechselvorrichtung bzw. Aufnahmebehälter zur Aufnahme der Filtervorrichtung, wobei der Behälter zur Aufnahme der Filtervorrichtung über Manipulationsmittel mit dem Schwimmkörper verbunden ist, wobei die Manipulationsmittel derart ausgestaltet sind, dass sie den Aufnahmebehälter in eine Position unterhalb der Filtervorrichtung bringen können, um diese aufzunehmen, sowie durch ein Verfahren zum Auswechseln einer Filtervorrichtung mittels eines schwimmfähigen Reinigungssystems mit den Schritten: Positionieren des Aufnahmebehälters unterhalb der Filtervorrichtung durch Betätigung der Manipulationsmittel, Lösen der Filtervorrichtung durch Betätigung einer Halterungsvorrichtung, Auffangen der gelösten Filtervorrichtung in dem Aufnahmebehälter und Transport der Filtervorrichtung in eine Position zum Wechseln der Filtervorrichtung durch Betätigung der Manipulationsmittel.

In einer bevorzugten Ausführungsform der Erfindung besteht der Schwimmkörper (bzw. die Schwimmkörper) aus einem bzw. mehreren Mehrkammersystem(en). Ein erfindungsgemäßes Mehrkammersystem weist vorzugsweise zwischen zwei und sechzehn Kammern auf. Ausführungsformen mit mehr Kammern sind allerdings denkbar. Der Schwimmkörper kann auch aus zwei miteinander verbundenen Kufen oder Rohren bestehen, welche jeweils eine gleiche Anzahl von Kammern aufweisen. Allerdings sind auch Ausführungsformen mit mehreren Kufen oder Rohren mit jeweils gleichen oder unterschiedlichen Anzahlen an Kammern möglich.

In einer weiteren bevorzugten Ausführungsform der Erfindung ist das Mehrkammersystem so ausgestaltet, dass der Schwimmkörper auch bei Beschädigungen von bis zu 25% (d. h. der Kammern) schwimmfähig bleibt. Dies wird erreicht durch eine entsprechende Kammeranzahl in Abstimmung mit der für die gesamte Vorrichtung benötigten Auftriebskraft. Auf diese Weise wird den hohen Sicherheitsstandards, die beim Umgang mit kontaminierten Medien gelten, Rechnung getragen.

In einer noch weiteren bevorzugten Ausführungsform der Erfindung ist der Schwimmkörper aus einem korrosionsresistenten Material, z. B. einem Kunststoffmaterial, gebildet. Hierdurch kann ein relativ niedriges Gewicht des Schwimmkörpers erreicht werden. Es sind allerdings auch Ausführungsformen aus Edelstahl denkbar, welche besser zu reinigen bzw. dekontaminieren sind.

In einer anderen bevorzugten Ausführungsform der Erfindung verfügt der Schwimmkörper über Haltemittel, um den Schwimmkörper mit einem Beckenrand verbinden zu können. Durch die Haltemittel (z. B. Seile oder Stangen) kann bei Bedarf die Lage des Schwimmkörpers in dem entsprechenden Becken zusätzlich stabilisiert werden.

In einer weiteren bevorzugten Ausführungsform der Erfindung ist die Filtervorrichtung über eine Aufhängung und eine Halterungsvorrichtung mit dem Schwimmkörper verbunden. Auf diese Weise kann, in Verbindung mit einer geeigneten Antriebseinrichtung, die Filtervorrichtung jedenfalls in der Z-Ebene bewegt werden. Die Aufhängung ist dabei regelmäßig als Gestänge oder als Seilvorrichtung ausgebildet. Sie kann im Übrigen auch in der X- und Y-Ebene beweglich ausgestaltet sein.

In einer wiederum anderen bevorzugten Ausführungsform der Erfindung besteht die Halterungsvorrichtung zumindest aus einem Bügel und einem Verriegelungsmechanismus besteht. Der Bügel dient dabei zum Halten der Filtervorrichtung und der Verriegelungsmechanismus dient zum Verriegeln bzw. Freigeben der Filtervorrichtung. Der Verriegelungsmechanismus besteht vorzugsweise aus einer schwenkbaren Hakenanordnung, welche etwa über ein Führungsgestänge bewegt werden kann, wobei die Hakenanordnung mit korrespondierenden Flanschen an der Filteranordnung zusammenwirkt.

In einer weiteren bevorzugten Ausführungsform der Erfindung bestehen die Manipulationsmittel für den Aufnahmebehälter aus einer Hebevorrichtung. Durch die Hebevorrichtung kann der Aufnahmebehälter für die Filtervorrichtung in der X-, Y- und Z- Richtung bewegt werden, um ihn in eine Position (z. B. an der Oberfläche) zubringen, die das Auswechseln des Filters bzw. der Filterelemente ermöglicht. Vorzugsweise umfasst die Hebevorrichtung eine Gelenkfunktion für den Aufnahmebehälter, um diesen nach der Aufnahme der Filtervorrichtung so zu verschwenken, dass das diese gehoben werden kann ohne dabei mit dem Schwimmkörper zu kollidieren.

In einer noch weiteren bevorzugten Ausführungsform der Erfindung ist das schwimmfähige Reinigungssystem zusammenklappbar ausgestaltet. Auf diese Weise kann das System in der Art einer Pontonbrücke verladen und transportiert werden.

Weitere Details und bevorzugte Ausführungsformen, sowie Vorteile, die durch das erfindungsgemäße schwimmfähige Reinigungssystem sowie das erfindungsgemäße Verfahren gelöst werden, sind in der folgenden Beschreibung der Zeichnung enthalten. In dieser zeigen:
- Fig. 1: eine schematische Darstellung eines erfindungsgemäßen schwimmfähigen Reinigungssystems in einem mit einer Flüssigkeit gefüllten Becken.
- Fig. 2a-c: mögliche Ausführungsformen des erfindungsgemäßen Schwimmkörpers in der Draufsicht.

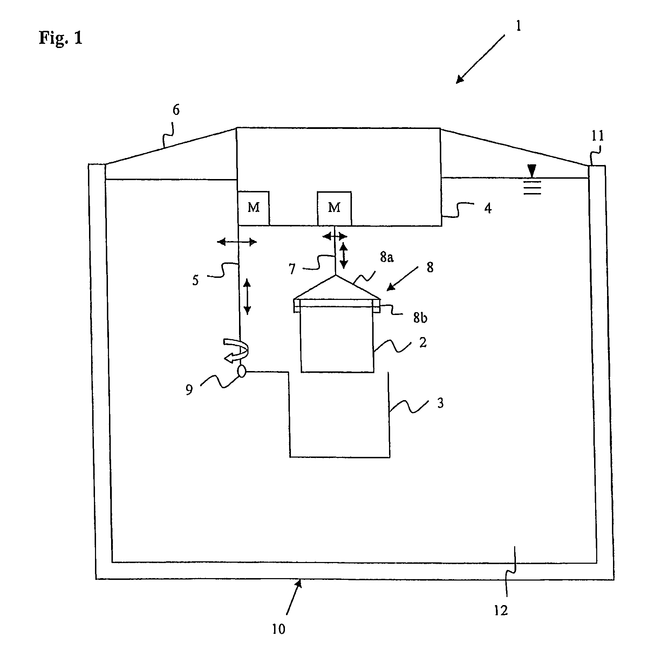

In Fig. 1 wird das erfindungsgemäße schwimmfähige Reinigungssystem 1 schematisch veranschaulicht. Der Schwimmkörper 4 ist in einem mit einer zu reinigenden Flüssigkeit 12 gefüllten Becken 10 angeordnet. Der Schwimmkörper 4 ist dabei mittels der Haltemitteln 4 am Beckenrand 11 des Beckens 10 festgemacht, um seine Schwimmposition zu stabilisieren. Der Schwimmkörper 4 ist über die Aufhängung 7 und die Halterungsvorrichtung 8 mit der Filtervorrichtung 2 verbunden. Die Halterungsvorrichtung 8 besteht regelmäßig aus einem Bügel 8a und einem Verriegelungsmechanismus 8b. Der Bügel 8a dient dabei zum Halten der Filtervorrichtung und ist seinerseits mit der Aufhängung 7 verbunden. Die Aufhängung 7 ist mit dem Schwimmkörper 4 verbunden, wobei in oder an dem Schwimmkörper eine Motor- bzw. Antriebseinheit M angeordnet ist, welche, je nach Bedarf, Bewegungen der Aufhängung in der Z-Ebene aber auch in der X- und Y-Ebene ermöglichen kann. Die Aufhängung 7 ist regelmäßig als Gestänge oder als Seilvorrichtung ausgebildet; es sind jedoch auch andere Aufhängungsformen denkbar. Der Verriegelungsmechanismus 8b wird üblicher Weise aus mehreren Führungsplatten und Haken gebildet, welche mit entsprechenden Flanschen an der Filtervorrichtung 2 zusammenwirken (nicht gezeigt). Es sind allerdings auch andere form-, kraft- oder reibschlüssige, ggf. auch magnetische, Verriegelungsmechanismen denkbar. Der Verriegelungsmechanismus 8b kann über die Motor- bzw. Antriebseinheit M betätigt werden oder durch eine separate Antriebseinheit. Wenn der Verriegelungsmechanismus 8b geöffnet wird, wird die Filtervorrichtung 2 freigegeben und kann in der Flüssigkeit 12 nach unten sinken, wo sie ggf. von dem Aufnahmebehälter 3 aufgefangen wird. Der Aufnahmebehälter 3 liegt üblicher Weise in Form eines Fasses aus Kunststoff oder Edelstahl vor und ist über die Manipulationsmittel 5 mit dem Schwimmkörper 4 verbunden. Die Manipulationsmittel 5 sind regelmäßig in der Form einer Hebevorrichtung ausgebildet, welche, je nach Bedarf, eine Bewegung des Aufnahmebehälters 3 in der X-, Y- oder Z- Ebene ermöglicht. Die Manipulationsmittel 5 können ebenfalls in der Form eines Gestänges oder einer Seilvorrichtung ausgebildet sein. Die Manipulationsmittel 5 können zudem auch ein Gelenk 9 umfassen mittels dem der Aufnahmebehälter 3 verschwenkt werden kann, so dass er beim Heben ggf nicht mit dem Schwimmkörper 4 kollidiert. Die Manipulationsmittel 5 können durch eine weitere Motor- bzw. Antriebseinheit M betätigt werden, welche allerdings auch in einer Einheit mit der Motor- bzw. Antriebseinheit M für die Halterungsvorrichtung 8 zusammengefasst sein kann. Die jeweiligen Motor- bzw. Antriebseinheiten M können von einer Steuerungsvorrichtung (nicht dargestellt) außerhalb des Beckens 10 angesteuert werden.

Ein typischer Wechselvorgang für die Filtervorrichtung 2 bzw. von Filterelementen der Filtervorrichtung läuft anhand der folgenden Schritte ab: Zunächst wird der Aufnahmebehälter 3 unterhalb der Filtervorrichtung 2 positioniert durch Betätigung der Manipulationsmittel 5. Anschließend wird die Filtervorrichtung 2 durch Betätigung der Halterungsvorrichtung 8 (bzw. des Verriegelungsmechanismus 8b) gelöst, d. h. die Halterungsvorrichtung 8 wird in eine Freigabestellung gebracht. Die solchermaßen gelöste bzw. freigegebene Filtervorrichtung kann nun in dem Aufnahmebehälter 3 aufgefangen werden. Schließlich erfolgt der Transport der Filtervorrichtung 2 in eine Position zum Wechseln der Filtervorrichtung 2 durch Betätigung der Manipulationsmittel 5. Üblicher erfolgt der Wechsel der Filtervorrichtung 2 bzw. der Filterelemente an der Flüssigkeitsoberfläche am Beckenrand 11. Die Beladung mit der ausgewechselten Filtervorrichtung 2 erfolgt in der umgekehrten Reihenfolge.

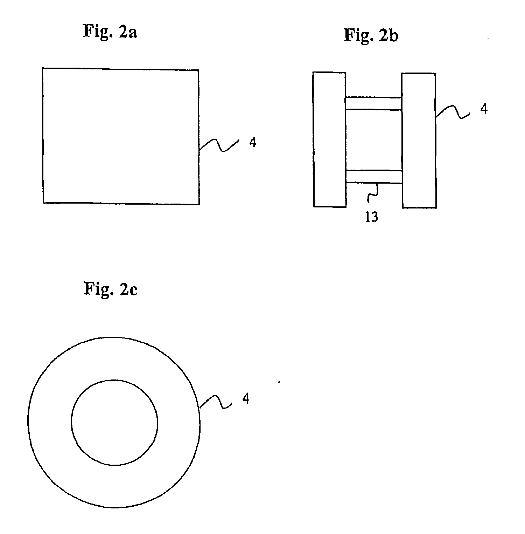

In den Figuren 2a - c werden verschiedene Ausführungsformen des erfindungsgemäßen Schwimmkörpers 4 veranschaulicht. Fig. 2a zeigt einen rechteckigen Schwimmköper 4. Fig. 2b zeigt eine Ausführungsform mit zwei separaten Schwimmkörpern 4, welche, in der Art eines Katamarans, über zwei Stege 13 miteinander verbunden sind. Die Stege 13 können dabei aus demselben Material gebildet sein wie der Schwimmkörper (z. B. Kunststoff) oder aus einem anderen Material (z. B. Metall). Sie können hohl ausgebildet sein oder massiv. In Fig. 2c ist der Schwimmkörper 4 in der Art eines Schwimmrings gebildet. Welche Form letztlich verwendet wird hängt von der Art und Weise ab, wie die Manipulationsmittel 5 und die Halterungsvorrichtung sowie die zugehörigen Motor- bzw. Antriebseinheiten am Schwimmkörper angeordnet sind sowie von der Art und Weise des Zusammenklappmechanismus.

**Bezugszeichenliste:**

| | |
|---|---|
| 1 | Schwimmfähiges Reinigungssystem |
| 2 | Filtervorrichtung |
| 3 | Aufnahmebehälter bzw. Wechselvorrichtung |
| 4 | Schwimmkörper |
| 5 | Manipulationsmittel |
| 6 | Haltemittel |
| 7 | Aufhängung |
| 8 | Halterungsvorrichtung |
| 8a | Bügel |
| 8b | Verriegelungsmechanismus |
| 9 | Gelenkfunktion |
| 10 | Becken |
| 11 | Beckenrand |
| 12 | Flüssigkeit |
| 13 | Stege |
| M | Motor- bzw. Antriebseinheit |

## Patentansprüche

1. Schwimmfähiges Reinigungssystem (1) zur Verwendung in Brennelement-und/oder Reaktorbecken von Kernkraftwerken, aufweisend:
- einen Schwimmkörper (4);
- eine Filtervorrichtung (2), welche lösbar mit dem Schwimmkörper (4) verbunden ist;
- einen Aufnahmebehälter (3) zur Aufnahme der Filtervorrichtung (2);
wobei der Aufnahmebehälter (3) zur Aufnahme der Filtervorrichtung (2) über Manipulationsmittel (5) mit dem Schwimmkörper (4) verbunden ist, wobei die Manipulationsmittel (5) derart ausgestaltet sind, dass sie den Aufnahmebehälter (3) in eine Position unterhalb der Filtervorrichtung (2) bringen können, um diese aufzunehmen.

2. Schwimmfähiges Reinigungssystem (1) nach Anspruch 1, **dadurch gekennzeichnet, dass** der Schwimmkörper (4) aus einem Mehrkammersystem besteht.

3. Schwimmfähiges Reinigungssystem (1) nach Anspruch 2, **dadurch gekennzeichnet, dass** das Mehrkammersystem so ausgestaltet ist, dass der Schwimmkörper (4) auch bei Beschädigungen von bis zu 25% schwimmfähig bleibt.

4. Schwimmfähiges Reinigungssystem (1) nach einem der vorhergehenden Ansprüche, **dadurch gekennzeichnet, dass** der Schwimmkörper (4) aus korrosionsresistentem Material gebildet ist.

5. Schwimmfähiges Reinigungssystem (1) nach einem der vorhergehenden Ansprüche, **dadurch gekennzeichnet, dass** der Schwimmkörper (4) über Haltemittel (6) verfügt, um den Schwimmkörper (4) mit einem Beckenrand (11)verbinden zu können.

6. Schwimmfähiges Reinigungssystem (1) nach einem der vorhergehenden Ansprüche, **dadurch gekennzeichnet, dass** die Filtervorrichtung (2) über eine Aufhängung (7) und eine Halterungsvorrichtung (8) mit dem Schwimmkörper verbunden ist.

7. Schwimmfähiges Reinigungssystem (1) nach Anspruch 6, **dadurch gekennzeichnet, dass** die Halterungsvorrichtung (8) zumindest aus einem Bügel (8a) und einem Verriegelungsmechanismus (8b) besteht.

8. Schwimmfähiges Reinigungssystem (1) nach einem der vorhergehenden Ansprüche, **dadurch gekennzeichnet, dass** die Manipulationsmittel (5) für den Aufnahmebehälter (3) aus einer Hebevorrichtung bestehen.

9. Schwimmfähiges Reinigungssystem (1) nach Anspruch 8, **dadurch gekennzeichnet, dass** die Hebevorrichtung eine Gelenkfunktion (9) für den Aufnahmebehälter (3) umfasst.

10. Schwimmfähiges Reinigungssystem (1) nach einem der vorhergehenden Ansprüche, **dadurch gekennzeichnet, dass** das schwimmfähige Reinigungssystem (1) zusammenklappbar ausgestaltet ist.

11. Verfahren zum Auswechseln einer Filtervorrichtung (2) mittels eines schwimmfähigen Reinigungssystems (1) nach Anspruch 1 mit den Schritten:
(a) Positionieren des Aufnahmebehälters (3) unterhalb der Filtervorrichtung (2) durch Betätigung der Manipulationsmittel (5);
(b) Lösen der Filtervorrichtung (2) durch Betätigung einer Halterungsvorrichtung (8);
(c) Auffangen der gelösten Filtervorrichtung (2) in dem Aufnahmebehälter (3);
(d) Transport der Filtervorrichtung (2) in eine Position zum Wechseln der Filtervorrichtung (2) durch Betätigung der Manipulationsmittel (5).

## Claims

1. Floatable cleaning assembly (1), particularly for use in fuel element and/or reactor pools of nuclear power plants, comprising:
- a floating body (4);
- a filtering device (2), which is connected with the floating body (4) in a detachable manner;
- a receiving container (3) for receiving the filtering device (2); wherein the receiving container (3) for receiving the filtering device (2) is connected with the floating body (4) by manipulating means (5), wherein the manipulating means (5) are provided in such a manner that they can bring the receiving container (3) in a position below the filtering device (2) in order to receive it.

2. Floatable cleaning assembly (1) according to claim 1, **characterized in that** the floating body (4) consists of a multi-chamber system.

3. Floatable cleaning assembly (1) according to claim 2, **characterized in that** the multi-chamber system is provided in such a manner that the floating body (4) remains floatable, even if damaged up to 25%.

4. Floatable cleaning assembly (1) according to one of the preceding claims, **characterized in that** the floating body (4) is made of corrosion resistant material.

5. Floatable cleaning assembly (1) according to one of the preceding claims, **characterized in that** the floating body (4) is connected with the pool edge (11) by holding means (6).

6. Floatable cleaning assembly (1) according to one of the preceding claims, **characterized in that** the filtering device (2) is connected with the floating body by a suspension (7) and a holding device (8).

7. Floatable cleaning device (1) according to claim 6, **characterized in that** the holding device (8) consists of at least one bracket (8a) and a locking mechanism (8b).

8. Floatable cleaning assembly (1) according to one of the preceding claims, **characterized in that**, the manipulation means (5) for the receiving container (3) consists of a lifting device.

9. Floatable cleaning assembly (1) according to claim 8, **characterized in that** the lifting device comprises a hinge function (9) for the receiving container (3).

10. Floatable cleaning assembly (1) according to one of the preceding claims, **characterized in that** the floatable cleaning assembly (1) is foldable.

11. Method for changing a filtering device (2) by means of a floatable cleaning assembly (1) according to claim 1 comprising the following steps:
a) positioning of the receiving container (3) below the filtering device (2) by actuating the manipulating means (5);
b) detaching the filtering device (2) by actuating a holding device (8);
c) catching the detached filtering device (2) in the receiving container (3);
d) transporting the filtering device (2) in a position for changing the filtering device (2) by actuating the manipulating means (5).

## Revendications

1. Système de nettoyage flottant (1) destiné à être utilisé dans les piscines des éléments combustibles et/ou des réacteurs de centrales nucléaires, comprenant :
- un flotteur (4) ;
- un dispositif de filtration (2) qui est relié de manière détachable au flotteur (4) ;
- un récipient de réception (3) destiné à recevoir le dispositif de filtration (2) ;
le récipient de réception (3) destiné à recevoir le dispositif de filtration (2) étant relié au flotteur (4) par des moyens de manipulation (5), lesquels moyens de manipulation (5) sont réalisés de façon à permettre de positionner le récipient de réception (3) sous le dispositif de filtration (2) afin de recevoir ce dernier.

2. Système de nettoyage flottant (1) selon la revendication 1, **caractérisé en ce que** le flotteur (4) se compose d'un système à plusieurs chambres.

3. Système de nettoyage flottant (1) selon la revendication 2, **caractérisé en ce que** le système à plusieurs chambres est conçu de façon que le flotteur (4) reste apte à flotter même en cas de dommages allant jusqu'à 25 %.

4. Système de nettoyage flottant (1) selon une des revendications précédentes, **caractérisé en ce que** le flotteur (4) est formé d'un matériau résistant à la corrosion.

5. Système de nettoyage flottant (1) selon une des revendications précédentes, **caractérisé en ce que** le flotteur (4) dispose de moyens de maintien (6) qui permettent de relier le flotteur (4) à un bord de piscine (11).

6. Système de nettoyage flottant (1) selon une des revendications précédentes, **caractérisé en ce que** le dispositif de filtration (2) est relié au flotteur par une suspension (7) et un dispositif de retenue (8).

7. Système de nettoyage flottant (1) selon la revendication 6, **caractérisé en ce que** le dispositif de retenue (8) se compose au moins d'une anse (8a) et d'un mécanisme de verrouillage (8b).

8. Système de nettoyage flottant (1) selon une des revendications précédentes, **caractérisé en ce que** les moyens de manipulation (5) pour le récipient de réception (3) se composent d'un dispositif de levage.

9. Système de nettoyage flottant (1) selon la revendication 8, **caractérisé en ce que** le dispositif de levage comprend une fonction d'articulation (9) pour le récipient de réception (3).

10. Système de nettoyage flottant (1) selon une des revendications précédentes, **caractérisé en ce que** le système de nettoyage flottant (1) est conçu de manière pliable.

11. Procédé de remplacement d'un dispositif de filtration (2) au moyen d'un système de nettoyage flottant (1) selon la revendication 1, présentant les étapes suivantes :
(a) positionnement du récipient de réception (3) sous le dispositif de filtration (2) par manoeuvre des moyens de manipulation (5) ;
(b) détachement du dispositif de filtration (2) par manoeuvre d'un dispositif de retenue (8) ;
(c) récupération du dispositif de filtration (2) détaché dans le récipient de réception (3) ;
(d) transport du dispositif de filtration (2) vers une position permettant de remplacer le dispositif de filtration (2) par manoeuvre des moyens de manipulation (5).
